# FASCICULE DE BREVET EUROPEEN

(11) **EP 3 366 942 B1**
(45) Date de publication et mention de la délivrance du brevet: **15.05.2019**
(21) Numéro de dépôt: 18158273.5
(22) Date de dépôt: 23.02.2018
(51) Int. Cl.: F16D 23/14

(54) **ENSEMBLE DE TRANSMISSION PERFECTIONNE ET MODULE D'EMBRAYAGE COMPRENANT UN TEL ENSEMBLE**
PERFEKTIONIERTE ÜBERTRAGUNGSEINHEIT UND KUPPLUNGSMODUL, DAS EINE SOLCHE EINHEIT UMFASST
IMPROVED TRANSMISSION ASSEMBLY AND CLUTCH MODULE COMPRISING SUCH AN ASSEMBLY

(30) Priorité: 28.02.2017 FR 1751612
(43) Date de publication de la demande: 29.08.2018
(73) Titulaire: Valeo Embrayages, 80009 Amiens cedex 2 (FR)
(72) Inventeur: BRAILLY, Julien, 80009 Amiens (FR); DELIENCOURT, Nicolas, 80009 Amiens (FR); MARECHAL, Olivier, 80009 Amiens (FR)

(56) Documents cités:
- EP-A2- 1 643 145
- GB-A- 2 073 341
- JP-A- S5 628 321
- US-A- 4 632 235

## Description

L'invention se rapporte à un ensemble de transmission perfectionné.

Plus précisément, l'invention concerne un perfectionnement des ensembles de transmission comprenant, notamment, un mécanisme d'embrayage constitué d'un couvercle, d'un plateau de pression et d'un diaphragme intercalé entre le couvercle et le plateau de pression.

### ÉTAT DE LA TECHNIQUE ANTÉRIEURE

Il existe des ensembles de transmission, destinés plus particulièrement aux véhicules ou motocycles, dans lesquels le diaphragme qui est intercalé entre le couvercle et le plateau de pression est équipé d'une coupelle centrale d'appui rapportée au centre du diaphragme.

Ces ensembles de transmission comprennent, en outre, une tige d'actionnement ou de commande d'embrayage, orientée selon l'axe de rotation du mécanisme, et dont une extrémité est guidée par des roulements et/ou des paliers par rapport à la boîte de vitesse. La tige d'actionnement permet de configurer alternativement le mécanisme en position embrayée ou débrayée sous l'action de moyens de commande d'embrayage reliés à la pédale ou à la poignée d'embrayage, respectivement, du véhicule ou du motocycle.
Cette tige axiale de commande porte un épaulement intermédiaire, partiellement sphérique, engagé dans un orifice de profil complémentaire et/ou conique ménagé dans la coupelle d'appui de sorte que lorsque la tige est déplacée en direction de la coupelle, le mécanisme d'embrayage est configuré en position débrayée. De tels ensembles d'embrayage sont décrits, notamment, dans le FR2556798A1 et le DE102014211470A1 qui s'appliquent à des embrayages dits « à sec » de moto, dans lesquels la tige de commande agit en poussée sur la coupelle d'appui pour assurer le débrayage. Le document EP1643145 A2 décrit également un ensemble d'embrayage, tel que définit dans l'introduction de la revendication 1.

La tige de commande est entrainée en rotation par le mécanisme d'embrayage via la coupelle et est généralement mise en pré-charge entre 20 et 50 N par les moyens de commande d'embrayage. La liaison en rotation entre la tige et la coupelle d'appui est alors assurée grâce à l'action conjointe de la pré-charge et d'un frottement important entre l'épaulement sphérique et la paroi de l'orifice dédié de la coupelle. Cependant, du fait de l'usure et/ou de l'augmentation du couple de trainée des paliers et/ou des roulements destinés au guidage de l'extrémité de la tige de commande par rapport à la boîte de vitesse, il a été observé que le contact de friction devient insuffisant ou se trouve altéré au cours du temps ce qui créé un différentiel entre le couple de trainée des roulements et le couple de rotation du diaphragme D.

Or, ce différentiel finit par générer un glissement relatif en rotation, entre l'épaulement sphérique et l'orifice de la coupelle, ce qui génère de l'usure dans la liaison entre la tige et la coupelle et est susceptible de perturber le débrayage.

Ce phénomène néfaste entraîne, en outre, des risques de détérioration ou de rupture de la tige et/ou de la coupelle avec, pour conséquences éventuelles, une panne et une immobilisation du véhicule.

### EXPOSÉ DE L'INVENTION

L'invention, dans tous ses modes de réalisation et leurs variantes, vise à remédier à ces problèmes techniques en cherchant à supprimer ce glissement par un renfort de la liaison en rotation entre la tige de commande et la coupelle centrale d'appui.

Ce but est atteint au moyen d'un ensemble de transmission constitué :
d'une part, d'un mécanisme d'embrayage à axe de rotation comprenant :
- un couvercle,
- un plateau de pression et,
- un diaphragme intercalé entre le couvercle et le plateau de pression et équipé d'une coupelle centrale d'appui rapportée au centre du diaphragme, et
   d'autre part, d'une tige de commande d'embrayage orientée selon l'axe de rotation du mécanisme et portant un épaulement intermédiaire, partiellement conique ou sphérique, engagé dans un orifice de profil complémentaire ménagé dans la coupelle d'appui de sorte que lorsque la tige est déplacée en direction de la coupelle d'appui, le mécanisme d'embrayage est configuré en position débrayée,
caractérisé en ce que la liaison entre la tige et la coupelle est bloquée en rotation au moyen d'une butée périphérique ménagée sur ladite tige et venant en prise avec un élément de coincement porté par ladite coupelle d'appui.

Avantageusement, la butée périphérique et l'élément de coincement coopèrent par engagement en correspondance de forme.

Avantageusement, l'orifice de la coupelle est de forme sphérique ou conique.

Selon une première variante de l'ensemble de transmission de l'invention, la butée est formée d'au moins un méplat réalisé de façon adjacente à l'épaulement intermédiaire de la tige et coopérant avec un élément de coincement formé d'au moins une face plane en regard portée par ladite coupelle d'appui.

De préférence, cette face plane est ménagée directement sur le pourtour intérieur de l'orifice de ladite coupelle d'appui.

Selon une sous-variante alternative, la face plane est réalisée sur une bague rapportée destinée à être fixée sur ladite coupelle d'appui autour de son orifice.

Selon une seconde variante de réalisation de l'ensemble de transmission de l'invention, la butée est formée d'un filetage réalisé de façon adjacente à l'épaulement de la tige et coopérant avec un élément de coincement formé d'un filet complémentaire porté par ladite coupelle et dont le sens de vissage est identique au sens de rotation du mécanisme d'embrayage.

De préférence, ce filet est ménagé directement sur le pourtour intérieur de l'orifice de ladite coupelle d'appui.

Selon une sous-variante alternative, le filet est réalisé sur une agrafe rapportée destinée à être fixée sur ladite coupelle d'appui autour de son orifice.

Selon une troisième variante de réalisation de l'ensemble de transmission de l'invention, l'élément de coincement est formé d'une excroissance de matière faisant saillie radialement par rapport à l'orifice de la coupelle d'appui dans un plan perpendiculaire à l'axe de rotation du mécanisme d'embrayage.

Selon une quatrième variante de réalisation de l'ensemble de transmission de l'invention, la butée est formée d'au moins un cran réalisé dans l'épaulement de ladite tige ou de façon adjacente audit épaulement et venant se loger dans un élément de coincement formé d'un créneau porté par ladite coupelle d'appui.

De préférence, ce créneau est ménagé directement sur le pourtour intérieur de l'orifice de ladite coupelle d'appui.

Selon une sous-variante alternative, le créneau est réalisé sur une bague rapportée destinée à être fixée sur ladite coupelle d'appui autour de son orifice.

Selon une cinquième variante de réalisation de l'ensemble de transmission de l'invention, ledit élément de coincement comprend une douille rapportée et fixée sur la coupelle d'appui dans l'alignement de son orifice central et qui est serrée au moins autour de la tige.

De préférence, cette douille est serrée, autour de la butée périphérique formée par une zone cylindrique de frottement additionnelle, au moyen d'un anneau fendu logé dans une gorge périphérique aménagé dans la douille.

Selon une caractéristique avantageuse, la paroi interne de l'orifice de la douille forme un élément de coincement en assurant un couple de frottement compris entre 0,6 Nm et 2 Nm avec la butée formée directement par la zone de frottement additionnelle de ladite tige.

Selon une caractéristique avantageuse, l'épaulement intermédiaire se prolonge vers la seconde extrémité de la tige par une section de diamètre restreint.

Un autre objet de l'invention est un module d'embrayage comprenant un ensemble de transmission tel que défini ci-dessous ainsi qu'un plateau de réaction, un disque d'embrayage en appui sur ledit plateau de réaction et une plaque de liaison destinée à être fixée sur l'arbre moteur, caractérisé en ce que ledit mécanisme d'embrayage est monté entre la plaque de liaison et le plateau de réaction.

Selon une de ses caractéristiques avantageuses, ce module comprend, en outre, une couronne de démarreur fixée sur le plateau de réaction.

Grâce à l'invention, le couplage en rotation de la tige de commande et de la coupelle est renforcé et verrouillé pour éviter les risques de glissement.

L'intégrité et la permanence de la liaison sont ainsi préservées et, en conséquence, les risques de panne par usure et blocage du mécanisme d'embrayage se trouvent écartés.

### BREVE DESCRIPTION DES FIGURES

D'autres caractéristiques et avantages de l'invention ressortiront à la lecture de la description qui va suivre, en référence aux figures annexées et détaillées ci-après.
La figure 1 est une vue en coupe d'un ensemble de transmission selon un premier mode de réalisation de l'invention représenté, à gauche, en position embrayée et, à droite, en position débrayée.
Les figures 2A et 2B représentent, respectivement, une vue du module d'embrayage de l'invention en perspective éclatée et une vue en perspective partielle de l'ensemble de transmission en position de montage selon un premier mode de réalisation de l'ensemble de transmission de l'invention.
Les figures 3A et 3B représentent des vues partielles, respectivement, en perspective éclatée et en position de montage d'une variante du premier mode de réalisation de l'ensemble de transmission de l'invention.
Les figures 4A, 4B et 4C sont des vues en perspective de trois variantes des éléments de coincement rapportés susceptibles d'être utilisés dans le premier mode de réalisation de l'ensemble de transmission de l'invention.
Les figures 5A et 5B représentent des vues partielles, respectivement, en perspective éclatée et en position de montage d'un second mode de réalisation de l'ensemble de transmission de l'invention.
Les figures 6A et 6B représentent des vues partielles, respectivement, en perspective éclatée et en position de montage d'un troisième mode de réalisation de l'ensemble de transmission de l'invention.
Les figures 7A et 7B représentent des vues partielles, respectivement, en perspective éclatée et en position de montage d'un quatrième mode de réalisation de l'ensemble de transmission de l'invention.
Les figures 8A et 8B représentent des vues partielles, respectivement, en perspective éclatée et en position de montage d'un cinquième mode de réalisation de l'ensemble de transmission de l'invention.
La figure 9 représente une vue partielle, et en perspective, d'une variante du premier mode de réalisation de l'ensemble de transmission de l'invention.
Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif. Il est explicitement prévu que l'on puisse combiner entre eux ces différents modes et variantes pour en proposer d'autres.

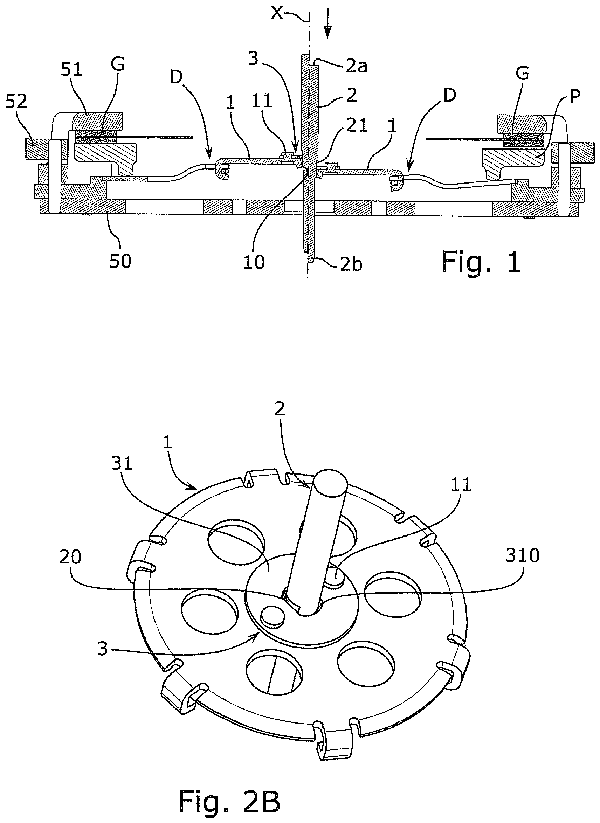

La figure 1 représente une vue en coupe d'un ensemble de transmission perfectionné selon un premier mode de réalisation de l'invention.

Un tel ensemble de transmission est généralement constitué d'un mécanisme d'embrayage à axe de rotation, comprenant un couvercle C, un plateau de pression P, des garnitures de friction G et un diaphragme D intercalé entre le couvercle C et le plateau de pression P. Le diaphragme D présente un orifice central de réception d'une coupelle d'appui 1 rapportée. L'ensemble de transmission comprend également une tige axiale 2 de commande d'embrayage orientée selon l'axe de rotation et prenant appui sur la coupelle d'appui 1.

La tige 2 de commande est guidée, d'une part, par rapport à la boîte de vitesse (non représentée) via une première extrémité 2a coopérant avec des paliers ou des roulements de guidage (non représentés) et porte, d'autre part, un épaulement intermédiaire 21, au moins partiellement conique ou sphérique, engagé dans l'orifice 10 de profil complémentaire ménagé au centre de la coupelle d'appui 1.

Ainsi, lorsque la tige 2 est poussée et déplacée en direction de la coupelle d'appui 1, le mécanisme d'embrayage est configuré en position débrayée, comme illustré par la partie droite de la figure 1.

Généralement, la tige 2 se prolonge, par une seconde extrémité 2b, au-delà de la coupelle 1 en direction du volant moteur (non représenté).

Dans l'art antérieur, le couplage en rotation de la tige 2 avec le diaphragme D n'est assuré que par la résistance mécanique résultant de l'action conjointe de la pré-charge d'appui de la tige 2 contre la coupelle 1 et du contact de frottement de l'épaulement 21 contre la paroi interne de l'orifice 10 de la coupelle 1.

Or, du fait de l'usure et/ou de l'augmentation du couple de trainée des roulements/paliers, ce contact de friction devient insuffisant ou se trouve altéré au cours du temps ce qui provoque un différentiel entre le couple de trainée des roulements de guidage de la tige 2 associés à la boîte de vitesse et le couple de rotation du diaphragme D. Ce différentiel finit par générer un glissement relatif, lors de la rotation, entre l'épaulement 21 et l'orifice 10 qui est préjudiciable à la bonne tenue et à la fermeté de la liaison entre la tige 2 et la coupelle 1.

L'invention consiste à renforcer la liaison entre la tige 2 et la coupelle 1 en bloquant ou en verrouillant cette liaison en rotation au moyen d'une butée périphérique ménagée sur la tige 2 et venant en prise avec un élément de coincement porté par la coupelle d'appui 1.

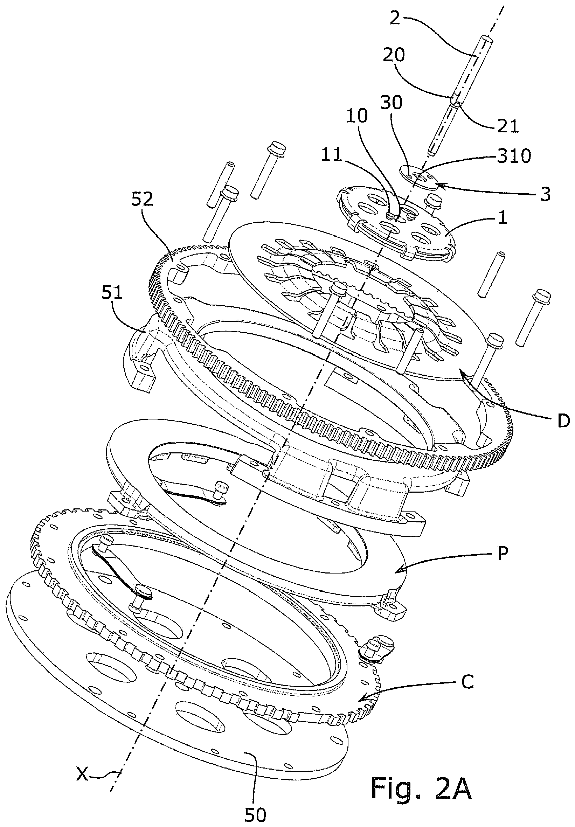

Dans le premier mode de réalisation de l'invention, illustré par les figures 2A et 2B, la butée est formée d'au moins un méplat 20 et, de préférence de deux méplats symétriques, positionnés de façon adjacente à l'épaulement intermédiaire 21 de la tige 2. Plus précisément, les méplats 20 s'étendent à la périphérie de la tige, parallèlement à son axe longitudinal et au-dessus de l'épaulement 21.

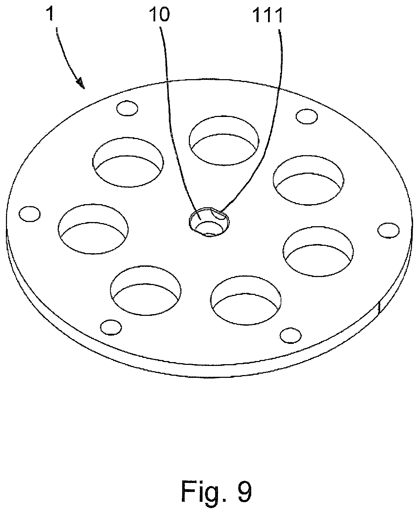

Pour assurer la solidarisation de la tige 2 dans l'orifice 10, chaque méplat 20 coopère avec un élément de coincement formé d'une face plane 111 en regard portée directement par le pourtour intérieur de l'orifice 10 de la coupelle 1, comme illustré sur la figure 9.

Dans la variante du premier mode de réalisation illustrée par la figure 9, la coupelle 1 est pourvue d'un orifice central 10 dans lequel est logée la tige 2. L'orifice 10 est de forme sphérique ou conique. L'orifice 10 présente également deux bords droits parallèles 111 en vis-à-vis venant chacun en contact de butée avec l'un des deux méplats 20 de la tige 2. Ainsi, les méplats 20 de la tige 2 et les faces planes formées par les bords parallèles 111 de l'orifice 10 coopèrent par engagement en correspondance de forme pour bloquer la rotation entre la tige 2 et la coupelle d'appui 1.

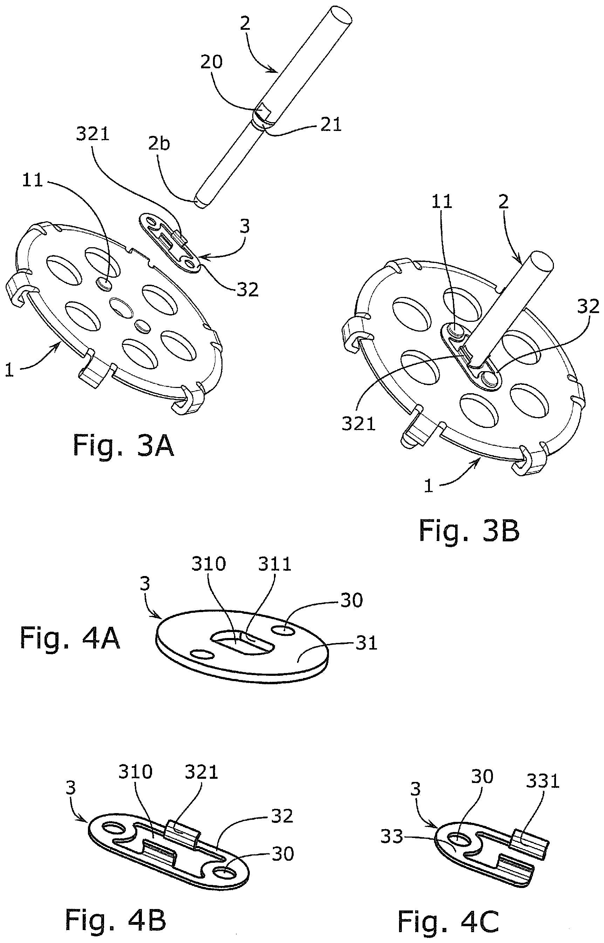

Pour assurer la solidarisation de la tige 2 dans l'orifice 10, chaque méplat 20 coopère avec un élément de coincement formé d'une face plane en regard portée par une bague 3 rapportée et fixée sur la coupelle 1 autour de son orifice 10, comme illustré par les figures 2A, 2B et 3A, 3B.

La bague 3 est fixée au moyen de rivets dont les tiges 11, réalisées ici d'une seule pièce par extrusion avec la coupelle d'appui 1, sont engagées dans des trous 30 de la bague 3. En variante, les rivets 11 pourront être rapportés.

Dans la variante illustrée par les figures 2A, 2B et 4A, la bague 3 est réalisée sous forme d'une rondelle 31, rigide et pleine, pourvue d'un trou central 310 dans lequel est logée la tige 2. Le trou 310 présente deux bords droits parallèles 311 en vis-à-vis venant chacun en contact de butée avec l'un des deux méplats 20 de la tige 2. Ainsi, les méplats 20 de la tige 2 et les bords parallèles 311 de l'orifice 310 coopèrent par engagement en correspondance de forme pour bloquer la rotation entre la tige 2 et la coupelle d'appui 1.

Dans la variante illustrée par les figures 3A, 3B et 4B, la bague 3 est réalisée sous forme d'une agrafe 32 qui, tout en étant plus légère et plus souple radialement que la rondelle 31, n'amène aucun jeu. Le gain de poids est obtenu grâce à un évidement central 320 qui reçoit la tige 2 et qui est plus grand que le trou 310.

Cette agrafe est pourvue de deux languettes 321 en vis-à-vis offrant chacune une face intérieure plane venant en contact de butée avec l'un des deux méplats 20 de la tige 2. Les extrémités des languettes 321 sont légèrement incurvées vers l'extérieur pour faciliter l'introduction de la tige 2.

Une autre variante de la bague est illustrée par la figure 4C. Dans cette variante, la bague 3 est sous forme d'une demi-agrafe 33 ouverte, portant deux languettes 331 de coincement des méplats 20 dont le profil est analogue à celui des languettes 321. L'agrafe 33 n'est ici fixée sur la coupelle d'appui 1 que par un seul rivet. La souplesse radiale de l'agrafe 32 apporte une pré-charge dans la liaison entre la tige 2 et la coupelle 1.

Accessoirement, la souplesse radiale de l'agrafe autorise un encliquetage de la tige sur la coupelle de sorte que le méplat 20 puisse être décalé axialement par rapport à l'épaulement de la tige 2. Dans ce cas, le méplat ne débouche pas dans l'épaulement.

Un autre avantage de ce mode de réalisation réside dans la possibilité d'un montage en « aveugle » de la tige 2 puisqu'il n'est pas nécessaire d'orienter angulairement la tige 2 par rapport à l'agrafe 32.

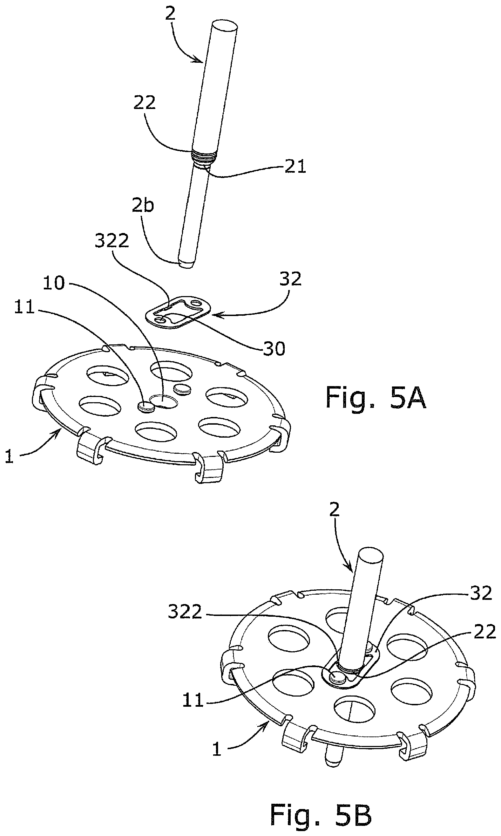

Dans un second mode de réalisation de l'invention tel qu'illustré par les figures 5A et 5B, la butée est formée d'un filetage 22 réalisé de façon adjacente à l'épaulement 21 sur la tige 2.

Le filetage 22 coopère avec un élément de coincement formé ici d'un filet complémentaire porté par la coupelle d'appui 1 et dont le sens de vissage est identique au sens de rotation du mécanisme d'embrayage.

Le filet est ménagé soit directement sur le pourtour intérieur de l'orifice 10 de la coupelle 1, soit sur une agrafe 32 rapportée et fixée par rivetage sur la coupelle 21 autour de son orifice 10.

L'agrafe 32 est analogue à celle utilisée dans la variante des figures 3A, 3B et 4B à la différence près que les deux languettes 321 ont été remplacées par deux tronçons de filet 322 en vis-à-vis qui viennent se visser et se bloquer, lors du tour de rotation initial, sur le filetage 22 de la tige 2.

Selon une autre variante non représentée, il serait possible, toujours dans le cadre de l'invention, d'utiliser un élément de coincement sous forme d'une rondelle rapportée analogue à la rondelle 31 de la figure 4A, comportant un taraudage complémentaire du filetage 22 sur le pourtour du trou 310.

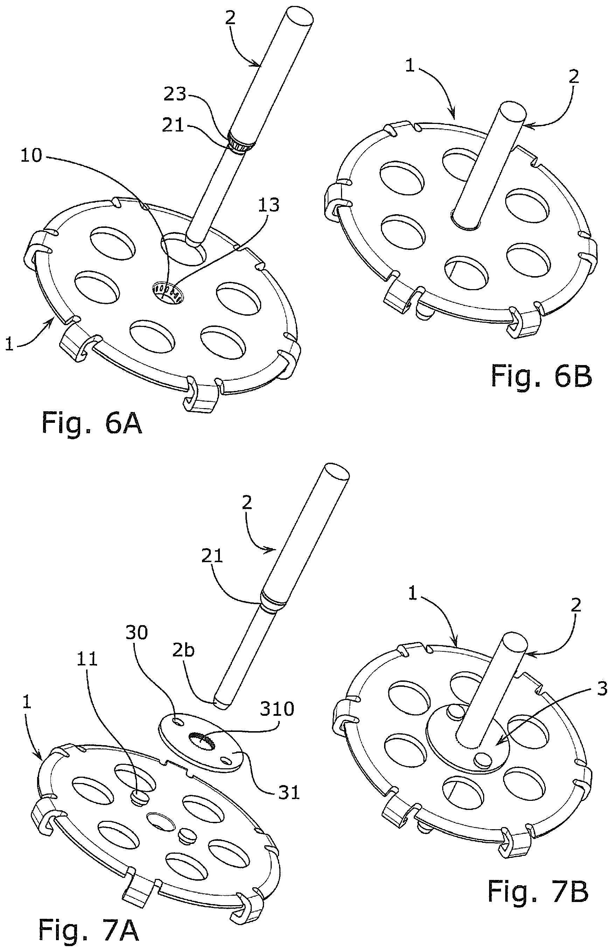

Dans un troisième mode de réalisation de l'invention illustré par les figures 6A et 6B, la butée est formée d'au moins un cran et ici d'une série de crans ou de dents 23 réalisés dans l'épaulement 21 de la tige 2.

Les crans 23 s'étendent de façon sensiblement longitudinale sur la tige 2 et viennent se loger dans un élément de coincement formé d'un ou plusieurs créneaux 13 portés par la coupelle d'appui 1. Dans ce dernier cas et après introduction et guidage axial de la tige 2 dans l'orifice 10, les crans 23 se trouvent bloqués en rotation entre les créneaux 13.

Ces créneaux sont, soit ménagés directement sur le pourtour intérieur de l'orifice 10 de la coupelle, comme illustré par la variante des figures 6A, 6B, soit réalisés sur une bague 3 rapportée et fixée par rivetage sur la coupelle 1 autour de son orifice, comme illustré par les figures 7A et 7B correspondant à un quatrième mode de réalisation. Dans ce cas, la bague 3 présente une structure sensiblement analogue à celle de la rondelle 31 de la figure 4A.

Selon cette variante de réalisation de ce quatrième mode, l'élément de coincement est formé par une série d'excroissances de matière faisant saillie radialement par rapport à l'orifice 10 de la coupelle d'appui 1 dans un plan perpendiculaire à l'axe de rotation du mécanisme d'embrayage.

Dans le quatrième mode de réalisation de l'invention illustré par les figures 7A et 7B, la butée est formée par les crans 23 qui sont alors réalisés de façon adjacente à l'épaulement 21 de la tige 2.

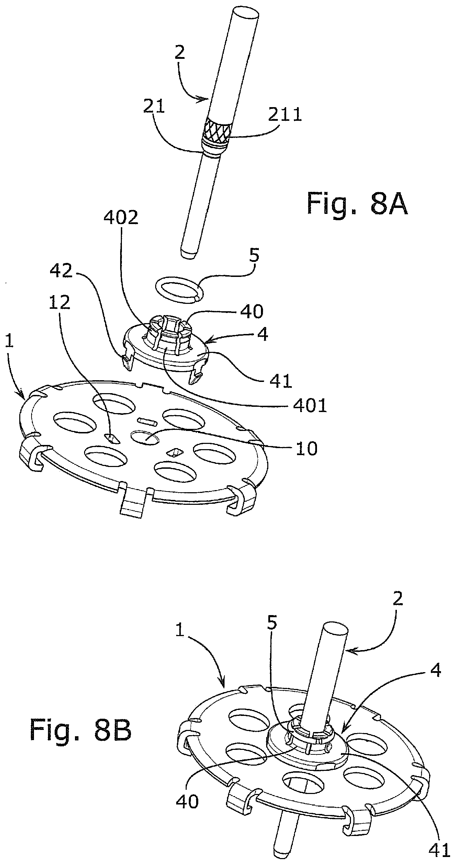

Dans un cinquième mode de réalisation de l'invention illustré par les figures 8A et 8B, l'élément de coincement comprend une douille 4 rapportée et fixée sur la coupelle 1 en étant alignée avec son orifice 10 et qui est serrée au moins autour de l'épaulement intermédiaire 21 de la tige 2.

La douille 4 est constituée d'une bague 41 qui est fixée par encliquetage au moyen de crochets 42 dans des fentes 12 ménagées au travers de la coupelle d'appui 1 et qui se prolonge d'une seule pièce par un conduit axial 40 destiné à recevoir la tige 2.

Au-dessus de l'épaulement 21, une zone de frottement additionnelle 211 est aménagée sur la tige 2. Cette zone de frottement additionnelle 211 est cylindrique et forme ici la butée périphérique. Le cas échéant, la zone de frottement additionnelle 211 est striée.

Le conduit 40 est délimité latéralement par des pattes flexibles 401. Le blocage de la tige 2 dans le conduit 40, au niveau de la zone de frottement additionnelle 211, est réalisé au moyen d'un lien circulaire 5 indépendant de serrage qui est monté en force autour du conduit 40 en étant logé dans une gorge périphérique 402 ménagée à l'extrémité des pattes 401, comme illustré par la figure 8B. Le lien circulaire 5 peut être un anneau fendu. En se rétractant dans la gorge périphérique 402, l'anneau fendu 5 vient appliquer un serrage uniforme sur la tige 2.

Dans ces conditions, la paroi interne de la douille 4 forme un élément de coincement en assurant un couple de frottement compris entre 0,6 Nm et 2 Nm avec la butée formée directement par la zone de frottement additionnelle 211 de la tige 2 qui est engagée et bloquée en rotation à l'intérieur de la douille 4.

L'ensemble de transmission de l'invention, tel que décrit ci-dessus dans ses multiples modes et variantes de réalisation, est intégré dans un module d'embrayage en association avec un disque d'embrayage, un plateau de réaction 51 et une plaque de liaison 50 fixée sur l'arbre moteur. Dans ce module d'embrayage, le mécanisme d'embrayage est monté entre la plaque de liaison 50 et le plateau de réaction 51.

Le disque d'embrayage est intercalé axialement entre le plateau de pression P et le plateau de réaction 51. Dans ce module, le plateau de réaction 51 est disposé à l'opposé de l'arbre moteur.

Le cas échéant, ce module comprend, en outre, une couronne de démarreur 52 fixée sur le plateau de réaction 51.

## Revendications

1. Ensemble de transmission constitué :
d'une part, d'un mécanisme d'embrayage à axe de rotation comprenant :
- un couvercle (C),
- un plateau de pression (P) et,
- un diaphragme (D) intercalé entre le couvercle et le plateau de pression et équipé d'une coupelle centrale d'appui (1) rapportée au centre du diaphragme (D), et
d'autre part, d'une tige (2) de commande d'embrayage orientée selon l'axe de rotation du mécanisme et portant un épaulement intermédiaire (21), partiellement conique ou sphérique, engagé dans un orifice (10) de profil complémentaire ménagé dans la coupelle d'appui (1) de sorte que lorsque la tige (2) est déplacée en direction de la coupelle d'appui (1), le mécanisme d'embrayage est configuré en position débrayée,
**caractérisé en ce que** la liaison entre la tige (2) et la coupelle d'appui (1) est bloquée en rotation au moyen d'une butée périphérique ménagée sur ladite tige (2) et venant en prise avec un élément de coincement porté par ladite coupelle d'appui (1).

2. Ensemble de transmission selon la revendication 1, **caractérisé en ce que** ladite butée est formée d'au moins un méplat (20) positionné de façon adjacente à l'épaulement intermédiaire (21) de la tige (2) et coopérant avec un élément de coincement formé d'au moins une face plane (111, 311, 321, 331) en regard portée par ladite coupelle d'appui (1).

3. Ensemble de transmission selon la revendication précédente, **caractérisé en ce que** ladite face plane (111) est ménagée directement sur le pourtour intérieur de l'orifice de ladite coupelle d'appui (1).

4. Ensemble de transmission selon la revendication 2, **caractérisé en ce que** ladite face plane (311, 321, 331) est réalisée sur une bague (3) rapportée destinée à être fixée sur ladite coupelle autour de son orifice (10).

5. Ensemble de transmission selon la revendication 1, **caractérisé en ce que** l'élément de coincement est formé d'une excroissance de matière faisant saillie radialement par rapport à l'orifice (10) de la coupelle d'appui (1) dans un plan perpendiculaire à l'axe de rotation du mécanisme.

6. Ensemble de transmission selon la revendication 1, **caractérisé en ce que** ladite butée est formée d'un filetage (22) réalisé de façon adjacente à l'épaulement (21) de la tige (2) et coopérant avec un élément de coincement formé d'un filet (322) complémentaire porté par ladite coupelle d'appui (1) et dont le sens de vissage est identique au sens de rotation du mécanisme d'embrayage.

7. Ensemble de transmission selon la revendication précédente, **caractérisé en ce que** ledit filet est ménagé directement sur le pourtour intérieur de l'orifice de ladite coupelle d'appui (1).

8. Ensemble de transmission selon la revendication 6, **caractérisé en ce que** ledit filet (322) est réalisé sur une agrafe (32) rapportée destinée à être fixée sur ladite coupelle d'appui (1) autour de son orifice (10).

9. Ensemble de transmission selon la revendication 1, **caractérisé en ce que** ladite butée est formée d'au moins un cran (23) réalisé dans l'épaulement (21) de la tige (2) ou de façon adjacente audit épaulement et venant se loger dans un élément de coincement formé d'un créneau (13) porté par ladite coupelle d'appui (1).

10. Ensemble de transmission selon la revendication précédente, **caractérisé en ce que** ledit créneau est ménagé directement sur le pourtour intérieur de l'orifice de ladite coupelle d'appui (1).

11. Ensemble de transmission selon la revendication 9, **caractérisé en ce que** ledit créneau (13) est réalisé sur une bague (3) rapportée et fixée sur ladite coupelle d'appui (1) autour de son orifice (10).

12. Ensemble de transmission selon la revendication 1, **caractérisé en ce que** ledit élément de coincement comprend une douille (4) rapportée et fixée sur la coupelle d'appui (1) dans l'alignement de son orifice (10) et qui est serrée au moins autour de ladite tige (2).

13. Ensemble de transmission selon la revendication précédente, **caractérisé en ce que** ladite douille (4) est serrée, autour de la butée périphérique formée par une zone cylindrique de frottement additionnelle (211), au moyen d'un anneau fendu (5) logé dans une gorge périphérique (402) aménagé dans la douille (4).

14. Ensemble de transmission selon la revendication précédente, **caractérisé en ce que** la paroi interne de la douille (4) forme un élément de coincement en assurant un couple de frottement compris entre 0,6 Nm et 2 Nm avec la butée formée directement par ladite zone de frottement additionnelle (211) de la tige (2).

15. Module d'embrayage comprenant un ensemble de transmission selon l'une des revendications 1 à 14 ainsi qu'un plateau de réaction (51), un disque d'embrayage en appui sur ledit plateau de réaction, et une plaque de liaison (50) destinée à être fixée sur l'arbre moteur, **caractérisé en ce que** ledit mécanisme d'embrayage est monté entre la plaque de liaison (50) et le plateau de réaction (51).

## Patentansprüche

1. Übertragungseinheit, bestehend aus:
einerseits einem Kupplungsmechanismus mit einer Drehachse, welcher umfasst:
- einen Deckel (C),
- eine Anpressplatte (P) und
- eine Membran (D), die zwischen dem Deckel und der Anpressplatte angeordnet ist und mit einem zentralen Stützteller (1) ausgestattet ist, der in der Mitte der Membran (D) aufgesetzt ist, und
andererseits eine Stange (2) zur Kupplungsbetätigung, die entlang der Drehachse des Mechanismus ausgerichtet ist und einen teilweise konischen oder kugelförmigen Zwischenabsatz (21) trägt, der in eine Öffnung (10) mit komplementärem Profil eingreift, die in dem Stützteller (1) ausgebildet ist, derart, dass, wenn die Stange (2) in Richtung des Stütztellers (1) verschoben ist, der Kupplungsmechanismus sich in einer ausgerückten Position befindet,
**dadurch gekennzeichnet, dass** die Verbindung zwischen der Stange (2) und dem Stützteller (1) mittels eines Umfangsanschlags gegen Verdrehen gesichert ist, der an der Stange (2) ausgebildet ist und mit einem Klemmelement in Eingriff gelangt, das von dem Stützteller (1) getragen wird.

2. Übertragungseinheit nach Anspruch 1, **dadurch gekennzeichnet, dass** der Anschlag von wenigstens einer Abflachung (20) gebildet wird, die dem Zwischenabsatz (21) der Stange (2) benachbart positioniert ist und mit einem Klemmelement zusammenwirkt, das von wenigstens einer gegenüberliegenden ebenen Fläche (111, 311, 321, 331) gebildet wird, die von dem Stützteller (1) getragen wird.

3. Übertragungseinheit nach dem vorhergehenden Anspruch, **dadurch gekennzeichnet, dass** die ebene Fläche (111) direkt auf dem Innenumfang der Öffnung des Stütztellers (1) ausgebildet ist.

4. Übertragungseinheit nach Anspruch 2, **dadurch gekennzeichnet, dass** die ebene Fläche (311, 321, 331) an einem aufgesetzten Ring (3) ausgebildet ist, der dazu bestimmt ist, auf dem Teller um dessen Öffnung (10) herum befestigt zu werden.

5. Übertragungseinheit nach Anspruch 1, **dadurch gekennzeichnet, dass** das Klemmelement von einem Materialvorsprung gebildet wird, der in einer zur Drehachse des Mechanismus senkrechten Ebene radial bezüglich der Öffnung (10) des Stütztellers (1) vorsteht.

6. Übertragungseinheit nach Anspruch 1, **dadurch gekennzeichnet, dass** der Anschlag von einem Gewinde (22) gebildet wird, das dem Absatz (21) der Stange (2) benachbart hergestellt ist und mit einem Klemmelement zusammenwirkt, das von einem komplementären Gewindegang (322) gebildet wird, der von dem Stützteller (1) getragen wird und dessen Schraubrichtung mit der Drehrichtung des Kupplungsmechanismus identisch ist.

7. Übertragungseinheit nach dem vorhergehenden Anspruch, **dadurch gekennzeichnet, dass** der Gewindegang direkt auf dem Innenumfang der Öffnung des Stütztellers (1) ausgebildet ist.

8. Übertragungseinheit nach Anspruch 6, **dadurch gekennzeichnet, dass** der Gewindegang (322) an einer aufgesetzten Klammer (32) ausgebildet ist, die dazu bestimmt ist, auf dem Stützteller (1) um dessen Öffnung (10) herum befestigt zu werden.

9. Übertragungseinheit nach Anspruch 1, **dadurch gekennzeichnet, dass** der Anschlag von wenigstens einem Zahn (23) gebildet wird, der in dem Absatz (21) der Stange (2) oder diesem Absatz benachbart ausgebildet ist und dann in einem Klemmelement aufgenommen wird, das von einer Lücke (13) gebildet wird, die von dem Stützteller (1) getragen wird.

10. Übertragungseinheit nach dem vorhergehenden Anspruch, **dadurch gekennzeichnet, dass** die Lücke direkt auf dem Innenumfang der Öffnung des Stütztellers (1) ausgebildet ist.

11. Übertragungseinheit nach Anspruch 9, **dadurch gekennzeichnet, dass** die Lücke (13) an einem Ring (3) ausgebildet ist, der auf den Stützteller (1) aufgesetzt und um dessen Öffnung (10) herum auf ihm befestigt ist.

12. Übertragungseinheit nach Anspruch 1, **dadurch gekennzeichnet, dass** das Klemmelement eine Hülse (4) umfasst, die auf den Stützteller (1) aufgesetzt und auf ihm befestigt ist, so dass er mit dessen Öffnung (10) fluchtet, und die wenigstens um die Stange (2) herum festgeklemmt ist.

13. Übertragungseinheit nach dem vorhergehenden Anspruch, **dadurch gekennzeichnet, dass** die Hülse (4) um den Umfangsanschlag herum, der von einem zylindrischen Bereich zusätzlicher Reibung (211) gebildet wird, mittels eines Spaltrings (5) festgeklemmt ist, der in einer in der Hülse (4) ausgebildeten Umfangsnut (402) aufgenommen ist.

14. Übertragungseinheit nach dem vorhergehenden Anspruch, **dadurch gekennzeichnet, dass** die Innenwand der Hülse (4) ein Klemmelement bildet, indem sie ein Reibungsmoment zwischen 0,6 Nm und 2 Nm mit dem Anschlag sicherstellt, der direkt von dem Bereich zusätzlicher Reibung (211) der Stange (2) gebildet wird.

15. Kupplungsmodul, welches eine Übertragungseinheit nach einem der Ansprüche 1 bis 14 sowie eine Gegendruckplatte (51), eine Kupplungsscheibe, die an der Gegendruckplatte anliegt, und eine Verbindungsplatte (50), die dazu bestimmt ist, auf der Motorwelle befestigt zu werden, umfasst, **dadurch gekennzeichnet, dass** der Kupplungsmechanismus zwischen der Verbindungsplatte (50) und der Gegendruckplatte (51) angebracht ist.

## Claims

1. Transmission assembly consisting:
on the one hand, of a clutch mechanism with an axis of rotation comprising:
- a cover (C),
- a pressure plate (P), and
- a diaphragm (D) interposed between the cover and the pressure plate and equipped with a central thrust cup (1) attached to the centre of the diaphragm (D), and
on the other hand, of a clutch control rod (2) oriented along the axis of rotation of the mechanism and bearing a partially conical or spherical intermediate shoulder (21) engaged in an orifice (10) of complementing profile formed in the thrust cup (1) so that when the rod (2) is moved in the direction of the thrust cup (1), the clutch mechanism is configured into the clutch-disengaged position,
**characterized in that** the connection between the rod (2) and the thrust cup (1) is prevented from rotating by means of a peripheral stop formed on the said rod (2) and coming into engagement with a wedging element borne by the said thrust cup (1).

2. Transmission assembly according to Claim 1, **characterized in that** the said stop is formed of at least one flat (20) positioned adjacent to the intermediate shoulder (21) of the rod (2) and collaborating with a wedging element formed of at least one flat face (111, 311, 321, 331) opposite, borne by the said thrust cup (1).

3. Transmission assembly according to the preceding claim, **characterized in that** the said flat face (111) is formed directly on the interior periphery of the orifice of the said thrust cup (1).

4. Transmission assembly according to Claim 2, **characterized in that** the said flat face (311, 321, 331) is created on an attached ring (3) intended to be fixed to the said cup around the orifice (10) thereof.

5. Transmission assembly according to Claim 1, **characterized in that** the wedging element is formed of a protrusion of material projecting radially with respect to the orifice (10) of the thrust cup (1) in a plane perpendicular to the axis of rotation of the mechanism.

6. Transmission assembly according to Claim 1, **characterized in that** the said stop is formed of a screw thread (22) created adjacent to the shoulder (21) of the rod (2) and collaborating with a wedging element formed of a complementing thread (322) borne by the said thrust cup (1) and the handedness of which is identical to the direction of rotation of the clutch mechanism.

7. Transmission assembly according to the preceding claim, **characterized in that** the said thread is formed directly on the internal periphery of the orifice of the said thrust cup (1).

8. Transmission assembly according to Claim 6, **characterized in that** the said thread (322) is created on an attached clip (32) intended to be fixed to the said thrust cup (1) around the orifice (10) thereof.

9. Transmission assembly according to Claim 1, **characterized in that** the said stop is formed of at least one tooth (23) created in the shoulder (21) of the rod (2) or adjacent to the said shoulder and coming to lodge in a wedging element formed of a crenel (13) borne by the said thrust cup (1).

10. Transmission assembly according to the preceding claim, **characterized in that** the said crenel is formed directly on the internal periphery of the orifice of the said thrust cup (1).

11. Transmission assembly according to Claim 9, **characterized in that** the said crenel (13) is created on an attached ring (3) fixed to the said thrust cup (1) around the orifice (10) thereof.

12. Transmission assembly according to Claim 1, **characterized in that** the said wedging element comprises an attached socket (4) fixed to the thrust cup (1) in alignment with the orifice (10) thereof and which is clamped at least around the said rod (2).

13. Transmission assembly according to the preceding claim, **characterized in that** the said socket (4) is clamped, around the peripheral stop formed by an additional cylindrical friction zone (211), by means of a split ring (5) housed in a peripheral groove (402) created in the socket (4).

14. Transmission assembly according to the preceding claim, **characterized in that** the internal wall of the socket (4) forms a wedging element by providing a friction torque of between 0.6 Nm and 2 Nm with the stop formed directly by the said additional friction zone (211) of the rod (2).

15. Clutch module comprising a transmission assembly according to one of Claims 1 to 14 and a reaction plate (51), a clutch disc pressing against the said reaction plate, and a connecting plate (50), intended to be fixed to the engine shaft, **characterized in that** the said clutch mechanism is mounted between the connecting plate (50) and the reaction plate (51).
